# EUROPÄISCHE PATENTSCHRIFT

(11) **EP 0 722 537 B1**
(45) Veröffentlichungstag und Bekanntmachung des Hinweises auf die Patenterteilung: **09.12.1998**
(21) Anmeldenummer: 94928749.4
(22) Anmeldetag: 30.09.1994
(51) Int. Cl.: F02D 9/02, B29C 45/14

(54) **DROSSELKLAPPENSTUTZEN MIT BETÄTIGUNGSVORRICHTUNG FÜR EIN DROSSELORGAN**
THROTTLE VALVE BODY WITH ACTUATING DEVICE FOR A THROTTLE MEMBER
CORPS DE PAPILLON AVEC DISPOSITIF D'ACTIONNEMENT POUR UN ORGANE D'ETRANGLEMENT

(30) Priorität: 02.10.1993 DE 4333676
(43) Veröffentlichungstag der Anmeldung: 24.07.1996
(73) Patentinhaber: ROBERT BOSCH GMBH, 70442 Stuttgart (DE)
(72) Erfinder: ROPERTZ, Peter, D-71696 Möglingen (DE)
(86) Internationale Anmeldenummer: DE9401167
(87) Internationale Veröffentlichungsnummer: WO9509977

(56) Entgegenhaltungen:
- DE-A- 3 912 843
- DE-A- 4 019 366
- DE-A- 4 119 535
- DE-A- 4 133 858
- DE-U- 8 906 045
- DE-U- 9 208 807
- FR-A- 735 759
- FR-A- 1 062 874
- FR-A- 1 520 630
- FR-A- 2 687 093
- US-A- 4 860 706
- US-A- 4 880 207
- KUNSTSTOFFE, Bd.78, Nr.2, 1. Februar 1988, MüNCHEN Seiten 151 - 153 STRASSER 'Stanzteile zum Einbetten in Kunststoffteile'

## Beschreibung

### Stand der Technik

Die Erfindung geht aus von einem Drosselklappenstutzen mit einer Betätigungsvorrichtung für ein Drosselorgan nach der Gattung des Hauptanspruchs. Es ist schon ein Drosselklappenstutzen mit einer Betätigungsvorrichtung für ein Drosselorgan bekannt (DE-U-89 06 045), das in dem Drosselklappenstutzen untergebracht ist. Das Drosselorgan ist mit einer Stellwelle verbunden, die im Drosselklappenstutzen drehbar gelagert ist. Des weiteren ist mit der Stellwelle drehfest an einem Stellwellenende der Stellwelle ein eine Verdrehung der Stellwelle bewirkendes Betätigungsglied verbunden. Die Stellwelle weist eine zylindrische Form auf mit im wesentlichen runden Querschnitt. Die bekannte Betätigungsvorrichtung besitzt aus Kunststoff bestehende Lagerabschnitte, die in hülsenförmigen Ansätzen des Drosselklappenstutzens vollständig eingebracht sind und zur Lagerung der Stellwelle im Drosselklappenstutzen dienen. An einem als Lager dienenden Lagerabschnitt ist ein Betätigungshebel angeformt, der an dem Ansatz des Drosselklappenstutzens anliegt, so daß kein aus dem Ansatz herausragendes Stellwellenende vorhanden ist. Durch die Ausbildung des Betätigungsgliedes ohne Abstand zu einer Außenfläche des Drosselklappenstutzens ergibt sich beim Herstellen des Betätigungsgliedes mit gleichzeitig angespritztem Lager, daß enge Herstellungstoleranzen einzuhalten sind, um eine Beweglichkeit des Betätigungsgliedes am Drosselklappenstutzen zu gewährleisten, so daß keine kostengünstige Herstellungsweise möglich ist.

In der Zeitschrift "Kunststoff", Band 78, Nr. 2, Februar 1988, Seiten 151 - 153, wird das Einbetten von flachen und wenig geformten Teilen in Kunststoff behandelt, die durch Stanzen aus Blech oder Bandstahl hergestellt werden.

Aus der DE-A-41 33 858 ist ferner eine Betätigungsvorrichtung bekannt, bei der zur Steuerung eines Drosselorgans, beispielsweise einer Drosselklappe einer Brennkraftmaschine, eine Stellwelle drehfest mit einem Betätigungsglied verbunden ist. Das Betätigungsglied ist in Form einer Seilscheibe aus Kunststoff ausgebildet, um beispielsweise einen Bowdenzug am Umfang der Seilscheibe zu führen und zu halten. Zur Befestigung der Seilscheibe ist diese mit einem U-förmigen Befestigungsbügel auf ein freies Stellwellenende der Stellwelle aufgeschoben. Der Befestigungsbügel ist vorgesehen, um die Stabilität der aus Kunststoff bestehenden Seilscheibe zu erhöhen, so daß eine Drehmomentübertragung möglich ist. Zur drehfesten Verbindung der Seilscheibe mit der Stellwelle weist die Stellwelle an dem Stellwellenende zwei gegenüberliegende Abflachungen auf, um den Befestigungsbügel in einer entsprechend der Form des Stellwellenendes nachgebildeten Durchgangsöffnung steckbar aufzunehmen, wobei ein Außengewinde zwischen beiden Abflachungen geschnitten ist, um den Befestigungsbügel mittels einer Befestigungsmutter axial zu halten.

Die Ausbildung des Betätigungsgliedes als separates, aufsteckbares Bauteil verursacht insbesondere bei einer Massenherstellung der Betätigungsvorrichtung einen erheblichen Montageaufwand, da nacheinander einzelne Bauteile in der Reihenfolge Betätigungsglied, Unterlegscheibe und Befestigungsmutter montiert werden müssen. Insbesondere ist zur Herstellung der Seilscheibe aus Kunststoff mit dem eingebundenen Befestigungsbügel und zur Ausbildung des Stellwellenendes mit Abflachungen und Gewinde ein relativ hoher fertigungstechnischer Aufwand notwendig, der hohe Produktionskosten zur Folge hat.

### Vorteile der Erfindung

Der erfindungsgemäße Drosselklappenstutzen mit einer Betätigungsvorrichtung für ein Drosselorgan hat demgegenüber den Vorteil, daß die Betätigungsvorrichtung in einfacher Art und Weise herstellbar ist. Dabei kann insbesondere durch den Wegfall der nach dem Stand der Technik benötigten Schraubverbindung der Montageaufwand und die Produktionskosten gesenkt werden.

Durch die in den Unteransprüchen aufgeführten Maßnahmen sind vorteilhafte Weiterbildungen und Verbesserungen des im Hauptanspruch angegebenen Drosselklappenstutzens möglich.

Von Vorteil ist, daß ein Betätigungsglied der Betätigungsvorrichtung in einfacher Art und Weise in verschiedenen Formen, zum Beispiel in Form einer Seilscheibe oder mit einem Haltezapfen versehen, herstellbar ist .

### Zeichnung

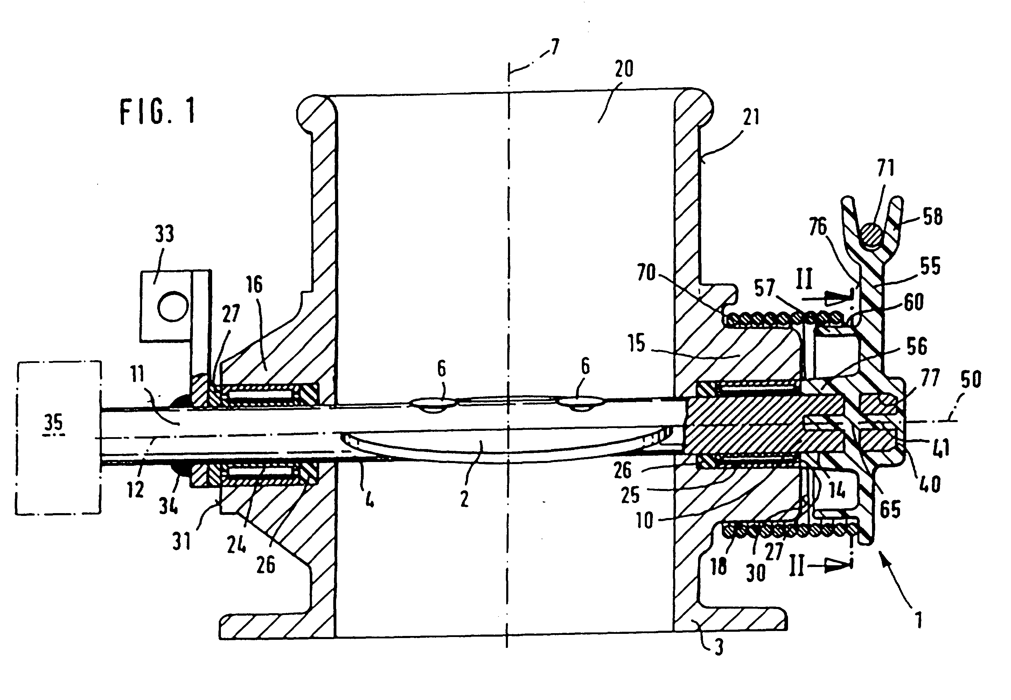

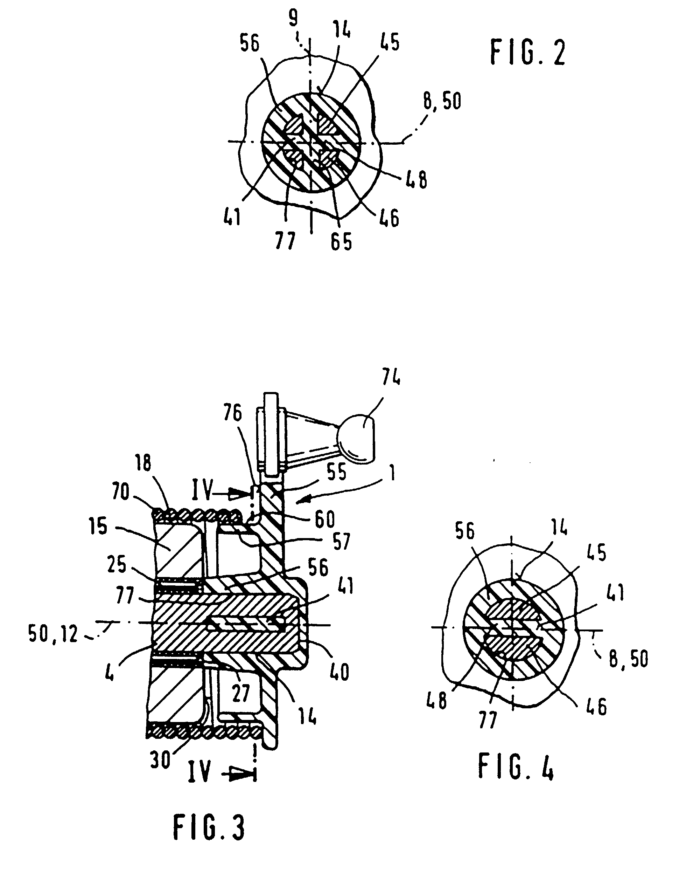

Ausführungsbeispiele der Erfindung sind in der Zeichnung vereinfacht dargestellt und in der nachfolgenden Beschreibung näher erläutert. Es zeigen Figur 1 einen Schnitt eines ersten Ausführungsbeispiels eines erfindungsgemäßen Drosselklappenstutzens mit einer Betätigungsvorrichtung, Figur 2 einen Schnitt entlang der Linie II-II der Figur 1, Figur 3 einen Schnitt eines zweiten Ausführungsbeispiels des erfindungsgemäßen Drosselklappenstutzens mit der Betätigungsvorrichtung in Teilansicht, Figur 4 einen Schnitt entlang der Linie IV-IV der Figur 3 des zweiten Ausführungsbeispiels.

### Beschreibung der Ausführungsbeispiele

Die Figur 1 zeigt in Schnittdarstellung einen erfindungsgemäß ausgebildeten Drosselklappenstutzen 3 mit einer Betätigungsvorrichtung 1, die mit einer Stellwelle 4 versehen zur Ansteuerung eines Drosselorgans dient, das beispielsweise in Form einer kreisrunden Drosselklappe 2 ausgeführt ist. Die Drosselklappe 2 ist Teil einer Drosselvorrichtung einer gemischverdichtenden, fremdgezündeten oder luftverdichtenden, selbstzündenden Brennkraftmaschine und ist drehfest mit der zum Beispiel zylindrisch ausgeführten Stellwelle 4 verbunden, die in dem Drosselklappenstutzen 3 beispielsweise beidseitig gelagert ist. Die Drosselklappe 2 steuert mehr oder weniger die in einen Ansaugkanal 20 des Drosselklappenstutzens 3, in etwa parallel zu einer Längsachse 7 einströmende Luftmenge, beziehungsweise ein einströmendes Brennstoffluftgemisch. Zur drehfesten Verbindung der Drosselklappe 2 ist die Stellwelle 4 beispielsweise mit einer länglichen, den Maßen der Drosselklappe 2 entsprechenden Ausnehmung versehen, in die die Drosselklappe 2 einschiebbar und danach mittels zum Beispiel zweier Schraubverbindungen 6 an der Stellwelle 4 verbindbar ist. Die Stellwelle 4 verläuft zentrisch zu einer Drehachse 12 der Drosselklappe 2 quer durch den Drosselklappenstutzen 3 hindurch. Dabei durchdringt die Stellwelle 4 auf zwei Seiten den Ansaugkanal 20 und ist in zwei, koaxial zur Drehachse 12 der Stellwelle 4 angeordneten, hülsenförmigen Ansätzen 15, 16 einer Außenwandung 21 des Drosselklappenstutzens 3, welche im folgenden als Stellteil 15 und Meßteil 16 bezeichnet werden, drehbar eingeschoben. Zur Lagerung der Stellwelle 4 sind wenigstens zwei Lagereinrichtungen 24, 25 vorgesehen, die beispielsweise in Form von Wälzlagern, insbesondere Nadellagern oder in Form von Gleitlagern ausgeführt sind.

Die Lagereinrichtung 24 ist innerhalb des in Figur 1 links gezeichneten Meßteils 16 und die Lagereinrichtung 25 innerhalb des in Figur 1 rechts gezeichneten Stellteils 15 eingebracht. Zur Abdichtung der Lagereinrichtungen 24, 25 sind zwei Dichtungen 26 vorgesehen, die in Form von Dichtungsringen an der Drosselklappe 2 zugewandten Lagerstirnflächen 27 der Lagereinrichtungen 24, 25 anliegen und diese abdichten. Die Stellwelle 4 ragt mit einem, in der Figur 1 rechts dargestellten ersten Stellwellenende 10 über eine ringförmige Außenfläche 30 des Stellteils 15 hinaus und endet mit einer Stirnfläche 40. Mit einem, in der Figur 1 links dargestellten, zweiten Stellwellenende 11 ragt die Stellwelle 4 über eine ringförmige Außenfläche 31 des Meßteils 16 hinaus. Zur elektronischen Leerlaufsteuerung oder Motorleistungssteuerung kann ein Anlenkhebel 33 am zweiten Stellwellenende 11 durch eine Schweißverbindung 34 mit der Stellwelle 4 verbunden sein, um von einem Drosselklappenanstellmotor betätigt zu werden, der seinerseits von einem elektronischen Steuergerät aktiviert wird. Zur Übermittlung elektrischer Signale und zur Kontrolle dient ein in der Figur 1 gestrichelt eingezeichneter Drehwinkelgeber 35, der am zweiten Stellwellenende 11 eine Verdrehung der Drosselklappe 2 mißt.

Erfindungsgemäß weist das erste Stellwellenende 10 eine längliche Ausnehmung 41 auf, die sich in Form eines Schlitzes durch die Stellwelle 4 entlang der Drehachse 12 erstreckt und eine axiale Erstreckung hat, die etwa von der Außenfläche 30 des Stellteils 15 bis zur Stirnfläche 40 des ersten Stellwellenendes 10 reicht. Die Ausnehmung 41 teilt das erste Stellwellenende 10, wie in der Figur 2 einer teilweisen Schnittdarstellung entlang einer Linie II-II der Figur 1 dargestellt ist, in zwei etwa gleich große Halbkreiszylinderteile 45, 46 auf, wobei die Stirnfläche 40 in zwei, jeweils ein Halbkreisabschnitt besitzende Teilstirnflächen unterteilt wird. Die Halbkreiszylinderteile 45, 46 sind symmetrisch mit radialem Abstand zu einer Schnittebene 50 orientiert, die von der Drehachse 12 und einer quer zur Längsachse 7 und quer zur Drehachse 12 orientierten Horizontalachse 8 aufgespannt wird. In der Figur 2 ist der Halbkreiszylinder 45 oberhalb und der Halbkreiszylinder 46 unterhalb der Horizontalachse 8, beziehungsweise der Schnittebene 50 dargestellt.

Die Betätigungsvorrichtung 1 wird gebildet durch ein Betätigungsglied 55 und die Stellwelle 4. Erfindungsgemäß ist das Betätigungsglied 55 als Kunststoffteil ausgebildet und an das erste Stellwellenende 10 angespritzt und weist eine Befestigungsinnenhülse 56 und eine Befestigungsaußenhülse 57 auf. Zur radialen Halterung des Betätigungsgliedes 55 umschließt die Befestigungsinnenhülse 56 mit einer zylindrisch ausgebildeten Innenwandung 77 eine äußere, zylindrische Mantelfläche 14 des ersten Stellwellenendes 10, wobei beim Anspritzen des Betätigungsgliedes 55 die Ausnehmung 41 mit dem Kunststoff der Befestigungsinnenhülse 56 ausgefüllt wird, so daß ein sich radial nach innen erstreckender, beidseitig von der Innenwandung 77 der Befestigungsinnenhülse 56 ausgehender Quersteg 48 aus Kunststoffgebildet wird, der die Ausnehmung 41 ausfüllt, um einstückig mit der Befestigungsinnenhülse 56 verbunden eine Drehmomentenübertragung zu ermöglichen. Zur axialen Halterung des Betätigungsgliedes 55 ist eine Durchgangsöffnung 65 vorgesehen, die zum Beispiel in Form einer Bohrung das erste Stellwellende 10, entlang einer parallel versetzt zur Längsachse 7 orientierten Bohrungsachse 9 radial durchdringt und in axialer Richtung etwa in der Mitte der axialen Erstreckung der Ausnehmung 41 vorgesehen ist. Die Durchgangsöffnung 65 durchdringt die Ausnehmung 41, so daß diese wie die Ausnehmung 41 mit dem Kunststoff der Befestigungsinnenhülse 56 ausgefüllt wird. Der längliche Quersteg 48 ermöglicht eine sichere Drehmomentenübertragung, so daß auch bei kritischen Belastungsfällen, wie dem sogenannten Zurückschnappen aus einer von einer Rückstellfeder 70 vorgespannten Lage der Betätigungsvorrichtung 1 keinerlei Schaden auftritt, wobei durch die mit Kunststoff ausgefüllte Durchgangsöffnung 65 eine sichere axiale Halterung des Betätigungsgliedes 55 gewährleistet ist. Wie in der Figur 1 dargestellt ist, hat die Befestigungsinnenhülse 56 eine etwas gröbere axiale Erstreckung als die Ausnehmung 41, so daß sich die Befestigungsinnenhülse 56 von der Außenfläche 30 des Stellteils 15 mit geringem axialen Abstand von der Lagerstirnfläche 27 der Lagereinrichtung 25 oder leicht anliegend an dieser über die Stirnfläche 40 des ersten Stellwellenendes 10 etwas hinaus erstreckt, um die Stirnfläche 40 mit Kunststoff der Befestigungsinnenhülse 56 zu überdecken.

Die auf eine Außenwandung 60 der Befestigungsaußenhülse 57 und auf eine Außenwandung 18 des Stellteils 15 aufgewickelte Rückstellfeder 70 dient vorrangig zur Erzeugung einer Rückstellkraft in Schließrichtung der Drosselklappe 2 und zusätzlich zum Rückführen eines mit dem Betätigungsglied 55 verbundenen Bowdenzugs 71, der in Verbindung mit einem Gaspedal einer Brennkraftmaschine eine Verdrehung der Stellwelle 4, beziehungsweise der Drosselklappe 2 bewirkt. Die Befestigungsaußenhülse 57 hat einen größeren Außendurchmesser als die Befestigungsinnenhülse 56, so daß die Befestigungsaußenhülse 57 mit radialem Abstand zur Außenwandung 60 die Befestigungsinnenhülse 56 umgreift, wobei sich die Befestigungsaußenhülse 57 in axialer Richtung mit axialem Abstand zur Lagereinrichtung 27, beziehungsweise zur Außenfläche 30 des Stellteils 15 etwa bis zur Bohrungsachse 9 erstreckt.

An die Befestigungsinnenhülse 56 schließt sich in radialer Richtung, einstückig als scheibenförmiger Fortsatz der Befestigungsinnenhülse 56 ausgebildet, das Betätigungsglied 55 an. Das Betätigungsglied 55 ist, wie in der Figur 1 dargestellt, rechts versetzt zur Bohrungsachse 9 vorgesehen und erstreckt sich in radialer Richtung parallel versetzt zur Bohrungsachse 9 über die einstückig verbundene Befestigungsaußenhülse 57 hinaus und hat beispielsweise die Form einer Seilscheibe, die einen gabelförmigen Endquerschnitt 58 besitzt, um entlang des Umfangs der Seilscheibe den Bowdenzug 71 aufzunehmen und zu halten.

Das Betätigungsglied 55 wird beispielsweise in Kunststoffspritzgußtechnik hergestellt, wobei das erste Stellwellenende 10 beispielsweise von zwei gegenüberliegend zur Drehachse 12 angeordneten Werkzeugteilen umschlossen wird, die beispielsweise einen entsprechend der äußeren Form des Betätigungsgliedes 55 mit der Befestigungsinnenhülse 56, der Befestigungsaußenhülse 57 ausgestalteten Füllraum aufweisen, in den Kunststoff eingespritzt wird, um nach dem Erstarren des Kunststoffes und dem Entfernen der Werkzeugteile das mit der Stellwelle 4 fest verbundene Betätigungsglied 55 freizugeben. Beim Spritzvorgang muß sichergestellt werden, daß sowohl die Ausnehmung 41 als auch die Durchgangsöffnung 65 mit Kunststoff ausgefüllt wird, um eine drehfeste Verbindung zu erhalten. Bei einer Temperaturerhöhung der Betätigungsvorrichtung 1, beispielsweise durch die von der Brennkraftmaschine abgegebene Wärme, erfolgt ein Ausdehnen des Kunststoffes in der Ausnehmung 41 und in der Durchgangsöffnung 65, so daß sich dieser in der Ausnehmung 41 und in der Durchgangsöffnung 65 vorteilhafterweise verstärkt verklemmt, um auch bei hohen Temperaturen der Betätigungsvorrichtung 1 eine sichere Drehmomentenübertragung und axiale Halterung des Betätigungsgliedes 55 zu gewährleisten.

Die Figur 3 und die Figur 4 zeigen ein zweites Ausführungsbeispiel des erfindungsgemäßen Drosselklappenstutzens 3 mit der Betätigungsvorrichtung 1, wobei alle gleichen oder gleichwirkenden Teile mit den gleichen Bezugszeichen des ersten Ausführungsbeispiels der Figuren 1 und 2 gekennzeichnet sind. Die Figur 3 zeigt einen Schnitt durch die Betätigungsvorrichtung 1, die im Gegensatz zum Ausführungsbeispiel der Figuren 1 und 2 ein teilweise scheibenförmig oder hebelförmig ausgebildetes Betätigungsglied 55 mit einem Haltezapfen 74 aufweist, der zur steckbaren Aufnahme des Bowdenzugs 71 dient. Gegenüber dem ersten Ausführungsbeispiel ist die Ausnehmung 41 als Schlitz ausgebildet, der nicht bis zur Stirnfläche 40 verläuft, sondern sich mit axialem Abstand von der Stirnfläche 40 etwa bis zur Außenfläche 30 des Stellteils 15 erstreckt, so daß die Stirnfläche 40 nicht unterteilt wird, wobei gleichbleibend dem ersten Ausführungsbeispiel zwei, symmetrisch zur Schnittebene 50 orientierte Halbkreiszylinder 45 und 46 vorhanden sind, die, wie in der Figur 4 einer Schnittdarstellung entlang der Linie IV-IV der Figur 3 dargestellt ist, im Bereich der Stirnfläche 40 miteinander verbunden sind. Die Ausnehmung 41 wird entsprechend dem ersten Ausführungsbeispiel beim Herstellen des Betätigungsgliedes 55 mit Kunststoff ausgefüllt, so daß wiederum ein von der Befestigungsinnenhülse 56 sich radial nach innen erstreckender Quersteg 48 zur Drehmomentenübertragung vorhanden ist, der jedoch mit axialen Abstand zur Stirnfläche 40 auch eine Halterung des Betätigungsgliedes 55 in axialer Richtung ermöglicht, so daß die Durchgangsöffnung 65 vorteilhafterweise entfallen kann.

## Patentansprüche

1. Drosselklappenstutzen (3) mit einer Betätigungsvorrichtung (1) für ein Drosselorgan (2) einer Brennkraftmaschine, das in dem Drosselklappenstutzen (3) untergebracht ist, mit einer mit dem Drosselorgan (2) verbundenen und im Drosselklappenstutzen (3) gelagerten Stellwelle (4), mit einem eine Verdrehung der Stellwelle (4) bewirkenden Betätigungsglied (55) aus Kunststoff, das drehfest an einem Stellwellenende (10) mit der Stellwelle (4) verbunden ist, die eine zylindrische Form aufweist mit im wesentlichen runden Querschnitt, dadurch gekennzeichnet, daß die Stellwelle (4) eine diese radial durchdringende Ausnehmung (41) hat, die sich in axialer Richtung der Stellwelle (4) in Form eines Schlitzes an dem aus dem Drosselklappenstutzen (3) frei aus einer Außenfläche (30) des Drosselklappenstutzens (3) herausragenden Stellwellenende (10) befindet, und daß das Betätigungsglied (55) an dem Stellwellenende (10) derart angespritzt ist, daß die Ausnehmung (41) mit Kunststoff ausgefüllt ist.

2. Drosselklappenstutzen nach Anspruch 1, dadurch gekennzeichnet, daß sich die Ausnehmung (41) bis zu einer Stirnfläche (40) des Stellwellenendes (10) erstreckt.

3. Drosselklappenstutzen nach Anspruch 2, dadurch gekennzeichnet, daß das Stellwellenende (10) eine quer zur Ausnehmung (41) vorgesehene Durchgangsöffnung (65) aufweist.

4. Drosselklappenstutzen nach Anspruch 1, dadurch gekennzeichnet, daß das Betätigungsglied (55) in Form einer Seilscheibe ausgebildet ist.

5. Drosselklappenstutzen nach Anspruch 1, dadurch gekennzeichnet, daß das Betätigungsglied (55) einen Haltezapfen (74) aufweist.

6. Drosselklappenstutzen nach Anspruch 1, dadurch gekennzeichnet, daß sich die Ausnehmung (41) in axialer Richtung in Form eines Schlitzes mit axialem Abstand von der Stirnfläche (40) entlang des Stellwellenendes (10) erstreckt.

7. Drosselklappenstutzen nach Anspruch 2, dadurch gekennzeichnet, daß die Stirnfläche (40) des Stellwellenendes (10) durch das Betätigungsglied (55) überdeckt ist.

8. Drosselklappenstutzen nach Anspruch 1, dadurch gekennzeichnet, daß das Betätigungsglied (55) eine Befestigungsinnenhülse (56) und mit radialem Abstand dazu eine Befestigungsaußenhülse (57) besitzt.

## Claims

1. Actuating device (1) for a throttling member (2) of an internal combustion engine, the said throttling member being accommodated in a throttle body (3), with an adjusting shaft (4) which is connected to the throttling member (2) and is mounted in the throttle body (3), with a plastic actuating member (55) which effects a rotation of the adjusting shaft (4) and is connected in torsionally rigid fashion to the adjusting shaft (4) at one end (10) of the adjusting shaft, characterized in that the adjusting shaft (4) has a recess (41) which passes through it radially and, in the axial direction of the adjusting shaft, appears in the form of a slot at that end (10) of the adjusting shaft which projects from the throttle body (3) and the actuating member (55) is moulded onto the end (10) of the adjusting shaft in such a way that the recess (41) is filled with plastic.

2. Actuating device according to Claim 1, characterized in that the recess (41) extends as far as an end face (40) of the end (10) of the adjusting shaft.

3. Actuating device according to Claim 2, characterized in that the end (10) of the adjusting shaft has a through opening (65) provided transversely to the recess (41).

4. Actuating device according to Claim 1, characterized in that the actuating member (55) is in the form of a cable pulley.

5. Actuating device according to Claim 1, characterized in that the actuating member (55) has a holding stud (74).

6. Actuating device according to Claim 1, characterized in that, in the axial direction, the recess (41) extends along the end (10) of the adjusting shaft in the form of a slot, at an axial distance from the end face (40).

7. Actuating device according to Claim 2, characterized in that the end face (40) of the end (10) of the adjusting shaft is covered by the actuating member (55).

8. Actuating device according to Claim 1, characterized in that the actuating member (55) has an inner fixing sleeve (56) and, with a radial clearance from the latter, an outer fixing sleeve (57).

## Revendications

1. Corps de papillon (3) comprenant un dispositif d'actionnement (1) pour un organe d'étranglement (2) d'un moteur à combustion interne, logé dans le corps (3), un axe de réglage (4) monté dans le corps (3) et relié à l'organe d'étranglement (2), un organe d'actionnement (55) faisant tourner de l'axe de réglage (4), cet organe d'actionnement en matière plastique étant relié solidairement en rotation à une extrémité (10) de l'axe de réglage (4) qui a une forme cylindrique de section essentielle circulaire,
caractérisé en ce que
l'axe de réglage (4) présente une cavité (41) qui le traverse radialement et se trouve, dans la direction axiale de l'axe de réglage (4), sous la forme d'une fente formée dans l'extrémité (10) de l'axe de réglage qui dépasse du corps (3), librement par rapport à la surface extérieure (30) du corps (3), et
l'organe d'actionnement (55) est injecté sur l'extrémité (10) de l'axe de réglage pour que la cavité (41) se remplisse de matière plastique.

2. Corps de papillon selon la revendication 1, caractérisé
en ce que
la cavité (41) arrive jusqu'à la face frontale (40) de l'extrémité (10) de l'axe de réglage.

3. Corps de papillon selon la revendication 2,
caractérisé en ce que
l'extrémité (10) de l'axe de réglage présente un orifice traversant (65) transversal à la cavité (41).

4. Corps de papillon selon la revendication 1,
caractérisé en ce que
l'organe d'actionnement (55) se présente sous la forme d'une poulie à câble .

5. Corps de papillon selon la revendication 1,
caractérisé en ce que
l'organe d'actionnement (55) comporte un téton de fixation (74).

6. Corps de papillon selon la revendication 1,
caractérisé en ce que
la cavité (41) s'étend dans la direction axiale sous la forme d'une fente, en s'arrêtant à une certaine distance axiale de la surface frontale (40) sur l'extrémité (10) de l'axe de réglage.

7. Corps de papillon selon la revendication 2,
caractérisé en ce que
la surface frontale (40) de l'extrémité (10) de l'axe de réglage est recouvert par l'organe d'actionnement (55).

8. Corps de papillon selon la revendication 1,
caractérisé en ce que
l'organe d'actionnement (55) comporte un manchon intérieur de fixation (56) et, à une distance radiale de celui-ci, un manchon extérieur de fixation (57).
